# EUROPEAN PATENT SPECIFICATION

(11) **EP 3 103 317 B1**
(45) Date of publication and mention of the grant of the patent: **30.12.2020**
(21) Application number: 16171550.3
(22) Date of filing: 26.05.2016
(51) Int. Cl.: A01D 34/78, A01D 34/68, A01D 34/82

(54) **LAWN MOWER AND METHOD OF STARTING LAWN MOWER**
RASENMÄHER UND VERFAHREN ZUM STARTEN EINES RASENMÄHERS
TONDEUSE À GAZON ET PROCÉDÉ DE DÉMARRAGE D'UNE TONDEUSE À GAZON

(30) Priority: 11.06.2015 SE 1550796
(43) Date of publication of application: 14.12.2016
(73) Proprietor: Husqvarna AB, 561 82 Huskvarna (SE)
(72) Inventor: NILSSON, Johan, 564 34 Bankeryd (SE); LOSDAL, Claes, 554 48 Jönköping (SE); SVENNUNG, Johan, 574 91 Vetlanda (SE); ANNVIK, Anna, 561 46 Huskvarna (SE); JOHANNSON, Anneli, 566 33 Habo (SE); MEJEGÅRD, Peter, 556 28 Jönköping (SE); KELEKIDIS, Panajottis, 560 30 Tenhult (SE); FINLÖV, Martin, 556 26 Jönköping (SE)
(74) Representative: Schröer, Gernot H.

(56) References cited:
- WO-A2-02/32212
- DE-U1- 8 108 936
- DE-U1-202004 005 143
- US-A- 3 982 082
- US-A1- 2009 038 281
- US-A1- 2013 111 864

## Description

### TECHNICAL FIELD

This application relates to a power equipment, and in particular to a lawn mower and a method of starting a lawn mower.

### BACKGROUND

Yard maintenance tasks are commonly performed using various tools and/or machines that are configured for the performance of corresponding specific tasks. Certain tasks, like grass cutting, are typically performed by lawn mowers. Lawn mowers themselves may have many different configurations to support the needs and budgets of consumers. Walk-behind lawn mowers are typically relatively compact, have comparatively small engines and are relatively inexpensive. Meanwhile, at the other end of the spectrum, riding lawn mowers, such as lawn tractors, can be quite large. Riding lawn mowers can sometimes also be configured with various functional accessories (e.g., trailers, tillers and/or the like) in addition to grass cutting components. Riding lawn mowers can also be ruggedly built and have sufficient power, traction, and handling capabilities to enable operators to mow over rough terrain, if needed.

Walk behind models are often used when smaller lots or tighter areas are to be mowed. Some, relatively simple walk behind models may move responsive only to the pushing force provided by the operator. However, other models may provide power to the wheels to assist the operator relative to providing mobility for the lawn mower. In many instances, the lawn mower may have power provided to either the front set of wheels, or the back set of wheels. The power may be provided, for example, to be selectively powered off the same shaft that turns a blade for cutting grass.

There is always a need to make lawn mowers safer for both experienced and inexperienced users, while still making them easy and intuitive to use. For safety reasons it would thus be beneficial to further improve the safety when using a walk behind lawn mower.

US2013111864 discloses a lawn mower including an internal combustion engine, an electric motor configured to start the internal combustion engine, and a blade driven by the internal combustion engine. The lawn mower further includes an assembly for stopping at least one of the blade and the internal combustion engine. The assembly includes a brake mechanism, a release mechanism, a linkage between the brake mechanism and the release mechanism. The assembly further includes an interlock configured to prevent the release mechanism from releasing the brake mechanism, and an interface allowing an operator to release the interlock. The electric motor is coupled to the assembly such that release of the brake mechanism automatically engages the electric motor to start the internal combustion engine.

WO 02/32212 A2 discloses an apparatus and method for starting a mower engine. The apparatus comprises a frame and an internal combustion engine operatively mounted to the frame. A control member is operatively connected to the frame, wherein the control member has an activated position and a deactivated position. The control member is adapted to complete an engine circuit when in the activated position. An energy storage medium is operatively associated with the engine such that release of energy stored in the energy storage medium turns the engine and facilitates its starting. A starting assembly is utilized to release the stored energy in the energy storage medium.

### SUMMARY

It is an object of the teachings of this application to overcome the problems listed above by providing a lawn mower comprising: a handle assembly for guiding operation of the lawn mower, an operator bail which is pivotably connected to the handle assembly, and a bail stop which when arranged in a locked position prevents the operator bail to be moved towards the handle assembly.

The inventors of the present invention have realized, after inventive and insightful reasoning that by arranging a bail stop at the operator bail an increased safety of the operator could be achieved. With a bail stop it is not possible to unintentionally start the lawn mower by accidently pushing the operator bail.

According to the invention the above mentioned object is achieved by a lawn mower comprising:
a handle assembly for guiding operation of the lawn mower;
an operator bail which is pivotably connected to the handle assembly; and
a bail stop which when arranged in a locked position prevents the operator bail to be moved towards the handle assembly.

When the bail stop is arranged in an un-locked position, the operator bail is allowed to be moved towards the handle assembly.

Rotation of at least a blade of the lawn mower is started once the operator bail is moved in proximity to the handle assembly.

The lawn mower further comprises a control panel comprising at least one activation button, which when pressed activates a power means of the lawn mower.

When the bail stop may be arranged in a locked position it prevents the operator bail from moving in any direction.

According to some embodiments, the operator bail may be allowed to be moved towards a cross bar of the handle assembly.

According to some embodiments, when the bail stop is arranged in an un-locked position, the operator bail may be allowed to be moved towards the handle assembly for engaging the lawnmower in active operation.

Also according to the invention, the above mentioned object is achieved by a method of starting a lawn mower comprising an operator bail, a bail stop and a handle assembly comprising a cross bar, wherein the method comprises the steps of:
activating the lawn mower by pressing an activation button;
moving the bail stop from a locked position into an un-locked position, and once the bail stop is in its un-locked position, the operator bail is allowed to be pulled in a direction towards the cross bar of the handle assembly, thus starting the lawn mower.

Activating the lawn mower is defined by activating a power means arranged in the lawn mower.

According to some embodiments, starting the lawn mower may be defined by starting a rotation of at least one blade arranged in the lawn mower.

According to a further aspect of the invention, there is provided a bail stop arranged to prevent an operator bail from moving towards a handle assembly.

According to embodiments, the bail stop may be arranged at a stroller, shopping cart, airline service trolley, luggage trolley or a lawn mower.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF DRAWINGS

The invention will be described in further detail under reference to the accompanying drawings in which:
Fig. 1 illustrates a perspective view of a walk-behind lawn mower according to an example embodiment;
Fig. 2 illustrates a closer perspective view of an operator bail and a bail stop according to an example embodiment;
Fig. 3 illustrates a closer perspective view of a control panel according to an example embodiment;
Fig. 4 illustrates a flowchart of a method of starting and stopping a lawn mower according to an example embodiment; and

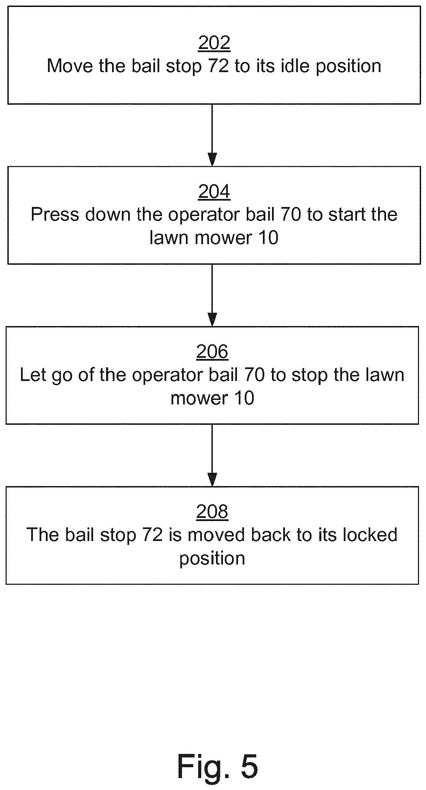

Fig. 5 illustrates a flowchart of a method of starting and stopping a lawn mower according to an example embodiment.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

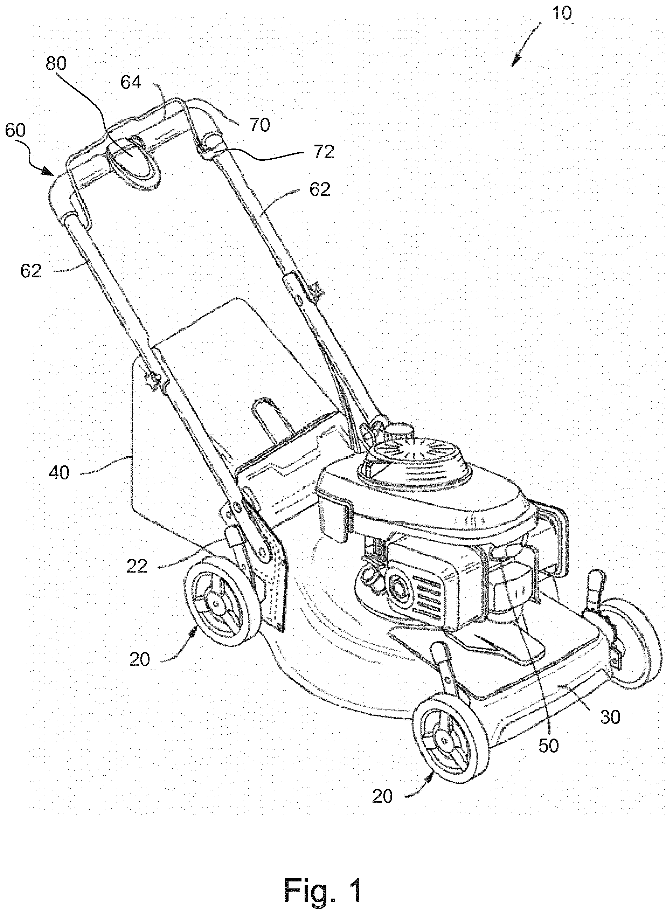

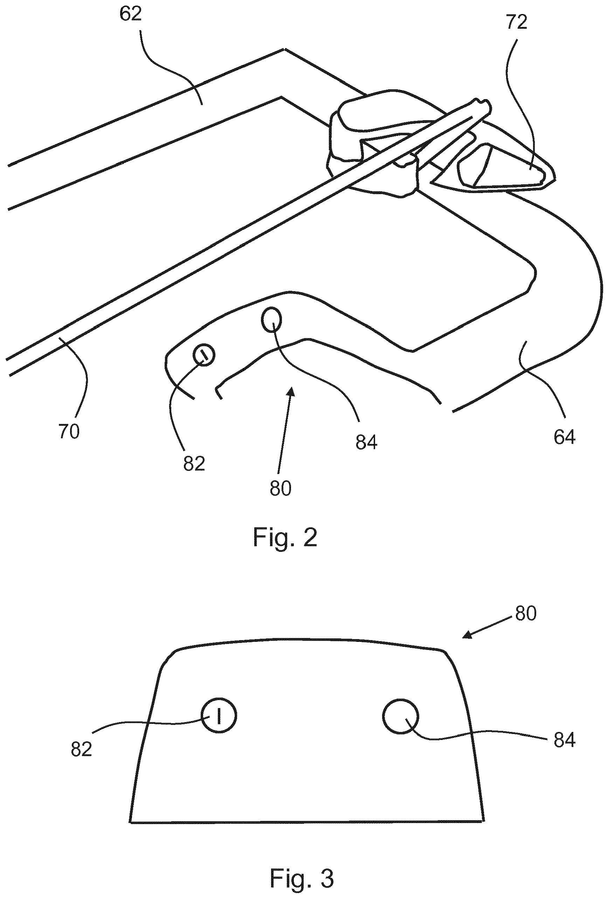

Fig. 1 illustrates a perspective view of a walk-behind lawn mower 10 of an example embodiment. The lawn mower 10 of Fig. 1 includes a blade housing 30 that may house a rotatable cutting blade (not shown). The cutting blade may be suspended above the ground at the end of a rotatable shaft (e.g., a drive shaft - again not shown in Fig. 1) that may be turned responsive to operation of a power means 50, such as an electric motor. According to the invention, the power means 50 are an electrical motor and is started via an activation button. According to the invention, and further described in conjunction with Fig. 2, the power means 50 is an electric motor which is activated by an activation button arranged on a control panel 80.

The lawn mower 10 may include a mobility assembly on which a substantial portion of the weight of the lawn mower 10 may rest, when the lawn mower 10 is stationary. The mobility assembly may also provide for movement of the lawn mower 10. In some cases, the mobility assembly may be driven via power from the power means 50 that may be selectively provided to either or both of front and back wheels 20, which make up the mobility assembly. However, in some cases, the mobility assembly may simply provide for mobility of the lawn mower 10 responsive to pushing by the operator if, for example, drive power is not being provided to both the front and back wheels 20. In other words, for example, the mobility assembly may be an active or passive provider of mobility for the lawn mower 10.

In some examples, the ground engaging wheels 20 may be adjustable in their respective heights. Adjusting the height of the front and/or back wheels 20 may be employed in order to provide a level cut and/or to adjust the height of the cutting blade. In some embodiments, a local wheel height adjuster 22 may be provided at the front and/or back wheels 20. However, in other embodiments, remote wheel height adjustment may also or alternatively be possible.

Rotation of the cutting blade may generate grass clippings, and/or other debris that may be ejected from the blade housing 30. In some cases, the clippings/debris may be ejected from a side or rear of the blade housing 30. When rear discharge is employed, many such lawn mowers may employ a bagging attachment 40 to collect discharged clippings/debris. However, bagging attachments may also be used for side discharge models in some cases. The bagging attachment 40 may be removable to enable the operator to empty the bagging attachment 40.

In an example embodiment, the lawn mower 10 further includes a handle assembly 60. The handle assembly 60 of Fig. 1 includes two handle members 62 that extend generally rearward and upward from opposing sides of a rear portion of the blade housing 30. The handle members 62 are substantially parallel to each other and are connected to each other at their distal ends via a cross bar 64. The handle members 62 may be adjustable in length or may be foldable to reduce the amount of space that the lawn mower 10 consumes when stored or shipped.

The lawn mower 10 further includes an operator bail 70. The operator bail 70 is pivotably connected to the handle member 62 of the lawn mower 10. In order to start the lawn mower 10, an operator has to grasp the operator bail 70 and pull it towards the cross bar 64 of the handle member 62, as when the operator bail 70 is held proximate to the cross bar 64, power may be enabled to be delivered to either or both of the front and back wheels 20 and/or permitting the cutting blades of the mower 10 to rotate. If the operator releases the operator bail 70, it is biased to pivot about the handle member 62 and thereby stopping the movement of the lawn mower 10. When the operator bail 70 is no longer held proximate to the cross bar 64, no power may be enabled to be delivered to either or both of the front and back wheels 20. Additionally or in place of above, the cutting blades may be disengaged. The operator thus has to hold the operator bail 70 in a close position to the handle member 70 in order to operate the lawn mower. In this way, if the operator loses control of the mower or leaves the mower unattended, the blades and/or the wheels stops automatically.

The operator bail 70 in Fig. 1 is in a rest position. Pulling the operator bail 70 in the direction to hold the operator bail 70 proximate to cross bar 64 may place the operator bail 70 into a pulled position, thereby starting the lawn mower, i.e. power is enabled to the wheels 20 and/or to the cutting blades. As will be described further with conjunction to Fig. 2, a bail stop 72 is provided to prevent the operator bail 70 to unintentionally be moved from the rest position into the pulled position.

Fig. 2 illustrates the operator bail 70 according to the invention. The bail stop 72 is provided in conjunction with the operator bail 70 in order to further increase the safety of the lawn mower 10. The bail stop 72 can be in a locked position, where the bail stop 72 prevents all movements of the operator bail 72, or in an un-locked position, where the bail stop 72 allows the operator bail 72 to move, such that the operator of the lawn mower may pull the operator bail 72 towards the cross bar 64.

When the bail stop 72 is in a locked position it prevents the operator bail 70 from moving in any direction. Hence, the operator bail 70 can not be pulled towards the cross bar 64 of the handle members 62 (into a pulled position), neither can it be pulled or pushed to the sides nor be pushed away from the cross bar 64. Unless moving the bail stop 72 into its un-locked position (i.e. when the bail stop 72 does not prevent movement of the operator bail 70) it is not possible to move the operator bail 70. This further increases the safety when operating a lawn mower since it protects against accidently starting the machine, which e.g. could happen if an operator gets tired and accidently pulls the operator bail 70 down when resting his arms on the handle assembly 60 or if children are playing nearby and by mistake touches the handle assembly 60.

In one embodiment, the bail stop 72 is moved back to its locked position automatically by a spring-driven mechanism. By having a spring-loaded bail stop 72, the locked position of the bail stop 72 is achieved as soon as the operator releases the operator bail 70 into its un-locked position.

In another embodiment, the bail stop 72 may be manually put into its locked position when the operator is no longer using the lawn mower. In yet another embodiment, the operator may choose if he/she whishes to manually put the bail stop 72 into its locked position or if this should occur automatically. This setting could be achieved by a button, key, switch or other similar device.

In one embodiment, the bail stop 72 may be moved between its locked and un-locked position by pressing it in a direction away from the operator bail 70. In another embodiment, the bails stop 72 may be moved between its locked and un-locked position by pulling it in a direction upwards.

As seen in the embodiment of Fig. 2, the bail stop 72 may be pressed to one of the sides, either towards or away from the operator bail 70, in order to move the bail stop 72 between the two positions.

The bail stop 72 may be constructed in a rigid plastic material. However, in other embodiments, metal or composite materials may be used. The bail stop 72 may be specially adapted to be user-friendly to operate, e.g. arranged with small ridges so that it is easier to get a grip of the bail stop 72.

Furthermore, in some embodiments, various controls may be provided proximate to the cross bar 64 and/or one or more of the handle members 62. For example, a trigger controller (not shown) may be provided in some cases. The trigger controller may be used to provide for remote actuation of various control functions. For example, pulling the movable member of the trigger controller may cause adjustments to be made to one or more transmissions of the lawn mower 10 or may cause movement of components to actuate shifting from no drive operation (e.g., zero-wheel drive where movement is only responsive to operator pushing) to a powered drive configuration. In some cases, however, the trigger controller may be replaced by a lever, knob, or other actuation device that may be operably coupled to a speed change gear, one or more transmissions or linkages associated therewith.

According to the invention, the power means 50 is an electric motor. Thus, the lawn mower 10 is driven by an electric motor, i.e. at least a blade of the lawn mower is driven by the electric motor, or put differently, at least the cutting blades are driven by the electric motor.

In Fig. 2, according to the invention the walk-behind lawn mower 10 is driven by an electric motor is shown. The electric motor is turned on and off by using at least one activation button 82 arranged on a control panel 80 (as shown in greater detail in Fig. 3). After activating the electric motor 50 by pressing the activation button 82, the lawn mower 10 is in an active passive state, waiting for the operator to move the bail stop 72. That is, in the active passive state, the lawn mower 10 is on stand-by and ready for starting the electric motor 50 when the operator actuates the operator bail 70. Once the bail stop 72 is moved into its un-locked state, the operator is permitted to press the operator bail 70 towards the crossbar 64 of the handle member 62 in order to initiate the rotation of the cutting blades and/or to start the movement of the wheels 20.

As can be seen in Fig. 3 a close-up view of the control panel 80 is provided, showing an activation button 82 and an indication light 84. In order to activate the walk-behind lawn mower 10, driven by an electric motor 50, the activation button 82 is pressed for a period of time. Once the button 82 is pressed for the predetermined period of time, an indication light 84 is turned on in order to indicate that the electric motor 50 is activated. The indication light 84 is an intuitive signal to the operator that the machine is active and can be started. The electric motor 50 is then active for a certain period of time, before the electric motor 50 is automatically deactivated, if no input from the operator has occurred during that time. The input from the operator can either be to move the bail stop 72 and subsequently press the operator bail towards the crossbar 64, or to press the activation button 82 in order to actively turn off the electric motor.

In one embodiment, the activation button 82 has to be pressed for 0, 5 seconds in order for the electric motor to be activated. The activation of the electric motor is then active for 10 minutes before the electric motor is automatically deactivated if no input from the operator has occurred during that time.

The control panel 80 may be a touch screen having at least one touch-sensible activation button 82. However, in another embodiment the button is of a push-type which not requires a touch-sensible screen 80.

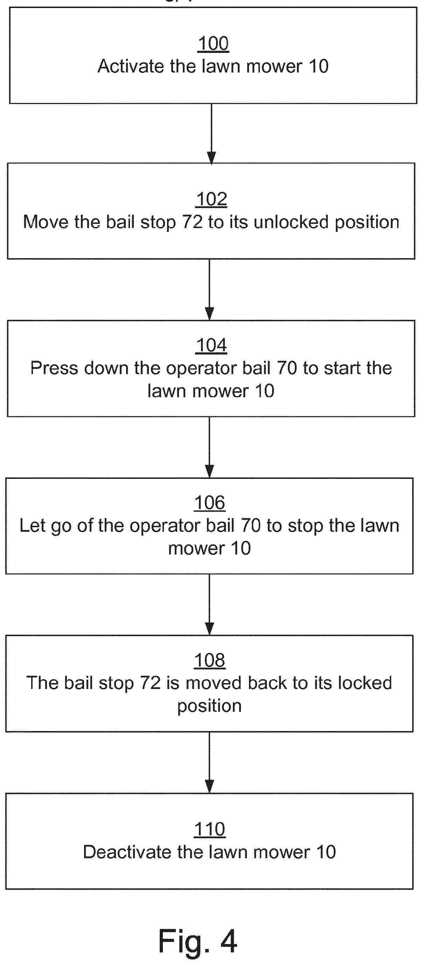

A method of starting and stopping a walk-behind lawn mower 10 is disclosed in Fig. 4. First, the lawn mower is activated 100, e.g. by pressing or pushing an activation button 82 on a control panel arranged in conjunction with the handle member 62. Secondly, the bail stop 72 is moved into its un-locked position 102. After moving the bail stop 72, the operator may press down the operator bail 70 towards the crossbar 64 of the handle member 62. This allows power to be delivered to the wheels and/or the cutting blades of the lawn mower 10, which initiates 104 the start of the lawn mower 10. When stopping 106 the lawn mower 10, the operator lets go of the operator bail 70 such that it is no longer in contact with the crossbar 64 of the handle member 62. The rotation of the blades and/or the rotation of the wheels is thus stopped and the bail stop 72 is automatically moved back to its locked position 108 preventing the operator bail 70 from being moved. The last step is the deactivation 110 of the lawn mower 10. Optionally, the operator manually deactivates the lawn mower 10 by pressing a deactivation button 82 or the lawn mower 10 automatically deactivates itself once the operator lets go of the operator bail 70.

It should be noted that although the method in Fig. 4 shows the step of acting the lawn mower 10 before moving the bail stop 72 into its un-locked position, this two steps could be reversed.

In another embodiment, as shown in Fig. 4, the method of starting or stopping a lawn mower does not comprise the step of activating and deactivating the lawn mower 10. This might be the case if the lawn mower 10 is not electrically driven which does not fall within the scope of the present invention which does not belong to the invention. Hence, the method of starting the lawn mower comprises the steps of moving the bail stop 72 into its un-locked position 202, thus allowing the operator to press down the operator bail 70 in order to start the lawn mower 204. In order to stop the lawn mower 206 the operator releases the operator bail 70 and the bail stop 72 is either moved back to its locked position 208 manually by the operator or automatically by a spring-driven mechanism in the bail stop 72.

The bail stop 72 is arranged to prevent an operator bail 70 from moving in any direction relative a handle assembly 60. Although the description has been focused on a bail stop 72 for a lawn mower, it should be understood that the bail stop 72 also may be arranged at a stroller, shopping cart, airline service trolley or a luggage trolley.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A walk-behind lawn mower (10) driven by an electric motor (50), comprising:
a handle assembly (60) for guiding operation of the lawn mower (10);
an operator bail (70) which is pivotably connected to the handle assembly (60); and
a bail stop (72) which when arranged in a locked position prevents the operator bail (70) to be moved towards the handle assembly (60), wherein
when the bail stop (72) is arranged in an un-locked position, the operator bail (70) is allowed to be moved towards the handle assembly (60), wherein
rotation of at least a blade of the lawn mower (10) is started once the operator bail (70) is moved in proximity to the handle assembly (60), and wherein
the lawn mower further comprises a control panel (80), wherein the control panel (80) comprises at least one activation button (82), which when pressed activates the electric motor (50) of the lawn mower (10).

2. The lawn mower of claim 1, wherein when the bail stop (72) is arranged in a locked position it prevents the operator bail (70) from moving in any direction.

3. The lawn mower of any of claims 1-2, wherein operator bail (70) is allowed to be moved towards a cross bar (64) of the handle assembly (60).

4. The lawn mower of any one of the preceding claims, when the bail stop (72) is arranged in an un-locked position, the operator bail (70) is allowed to be moved towards the handle assembly (60) for engaging the lawnmower (10) in active operation.

5. A method of starting a walk-behind lawn mower (10) driven by an electric motor (50) and comprising an operator bail (70), a bail stop (72) and a handle assembly (60) comprising a cross bar (64), wherein the method comprises the steps of:
activating the electric motor of the lawn mower (10) by pressing an activation button (82);
moving the bail stop (72) from a locked position into an un-locked position, and once the bail stop (72) is in its un-locked position, the operator bail (70) is allowed to be pulled in a direction towards the cross bar (64) of the handle assembly (62), thus allowing power to be delivered to wheels and/or cutting blades of the lawn mower (10), which initiates the start of the lawn mower (10).

6. Method according to claim 5, wherein activating the lawn mower (10) is defined by activating a power means (50) arranged in the lawn mower (10).

7. Method according to any of the claims 5-6, wherein starting the lawn mower (10) is defined by starting a rotation of at least one blade arranged in the lawn mower (10).

## Patentansprüche

1. Handgeführter Rasenmäher (10), der durch einen Elektromotor (50) angetrieben wird, der Folgendes umfasst:
eine Griffanordnung (60) zum Führen einer Bedienung des Rasenmähers (10);
einen Bedienerbügel (70), der mit der Griffanordnung (60) schwenkbar verbunden ist; und
einen Bügelanschlag (72), der, wenn er in einer verriegelten Position gelagert ist, verhindert, dass der Bedienerbügel (70) zu der Griffanordnung (60) hin bewegt wird, wobei,
wenn der Bügelanschlag (72) in einer entriegelten Position gelagert ist, der Bedienerbügel (70) zu der Griffanordnung (60) hin bewegt werden kann,
wobei eine Drehung wenigstens eines Messers des Rasenmähers (10) gestartet wird, sobald der Bedienerbügel (70) in eine Nähe der Griffanordnung (60) bewegt wird, und
wobei der Rasenmäher ferner ein Bedienfeld (80) umfasst, wobei das Bedienfeld (80) wenigstens einen Aktivierungsknopf (82) umfasst, der, wenn er gedrückt wird, den Elektromotor (50) des Rasenmähers (10) aktiviert.

2. Rasenmäher nach Anspruch 1, wobei der Bügelanschlag (72), wenn er in einer verriegelten Position gelagert ist, verhindert, dass sich der Bedienerbügel (70) in eine beliebige Richtung bewegt.

3. Rasenmäher nach einem der Ansprüche 1-2, wobei der Bedienerbügel (70) zu einer Querstange (64) der Griffanordnung (60) hin bewegt werden kann.

4. Rasenmäher nach einem der vorhergehenden Ansprüche, wobei, wenn der Bügelanschlag (72) in einer entriegelten Position gelagert ist, der Bedienerbügel (70) zu der Griffanordnung (60) hin zum Ineingriffnehmen des Rasenmähers (10) in aktiver Bedienung bewegt werden kann.

5. Verfahren zum Starten eines handgeführten Rasenmähers (10), der durch einen Elektromotor (50) angetrieben wird und einen Bedienerbügel (70), einen Bügelanschlag (72) und eine Griffanordnung (60), die eine Querstange (64) aufweist, umfasst, wobei das Verfahren die folgenden Schritte umfasst:
Aktivieren des Elektromotors des Rasenmähers (10) durch Drücken eines Aktivierungsknopfes (82);
Bewegen des Bügelanschlags (72) von einer verriegelten Position in eine entriegelte Position, und wobei, sobald sich der Bügelanschlag (72) in seiner entriegelten Position befindet, der Bedienerbügel (70) in eine Richtung zu der Querstange (64) der Griffanordnung (62) hin gezogen werden kann, wodurch Leistung auf Räder und/oder Schneidmesser des Rasenmähers (10) übertragen werden kann, was den Start des Rasenmähers (10) einleitet.

6. Verfahren nach Anspruch 5, wobei das Aktivieren des Rasenmähers (10) durch Aktivieren eines Leistungsmittels (50), das in dem Rasenmäher (10) gelagert ist, definiert ist.

7. Verfahren nach einem der Ansprüche 5-6, wobei das Starten des Rasenmähers (10) durch Starten einer Drehung wenigstens eines Messers, das in dem Rasenmäher (10) gelagert ist, definiert ist.

## Revendications

1. Tondeuse à gazon poussée (10) propulsée par un moteur électrique (50), comprenant:
un ensemble de poignée (60) pour guider le fonctionnement de la tondeuse à gazon (10);
une anse d'opérateur (70) qui est reliée de manière pivotante à l'ensemble de poignée (60); et
une butée d'anse (72) qui, lorsqu'elle est disposée dans une position verrouillée, empêche l'anse d'opérateur (70) d'être déplacée vers l'ensemble de poignée (60), dans laquelle
lorsque la butée d'anse (72) est agencée dans une position déverrouillée, l'anse d'opérateur (70) peut être déplacée vers l'ensemble de poignée (60),
dans laquelle
la rotation d'au moins une lame de la tondeuse à gazon (10) est démarrée une fois que l'anse d'opérateur (70) est déplacée à proximité de l'ensemble de poignée (60), et
dans laquelle
la tondeuse à gazon comprend en outre un panneau de commande (80), dans laquelle le panneau de commande (80) comprend au moins un bouton d'activation (82) qui, lorsqu'il est appuyé, active le moteur électrique (50) de la tondeuse à gazon (10).

2. Tondeuse à gazon selon la revendication 1, dans laquelle, lorsque la butée d'anse (72) est agencée dans une position verrouillée, elle empêche l'anse de l'opérateur (70) de se déplacer dans n'importe quelle direction.

3. Tondeuse à gazon selon l'une quelconque des revendications 1 à 2, dans laquelle l'anse de l'opérateur (70) peut être déplacée vers une barre transversale (64) de l'ensemble de poignée (60).

4. Tondeuse à gazon selon l'une quelconque des revendications précédentes, lorsque la butée d'anse (72) est agencée dans une position déverrouillée, l'anse d'opérateur (70) pouvant être déplacée vers l'ensemble de poignée (60) pour venir en prise avec la tondeuse à gazon (10) en fonctionnement actif.

5. Procédé de démarrage d'une tondeuse à gazon poussée (10) propulsée par un moteur électrique (50) et comprenant une anse d'opérateur (70), une butée d'anse (72) et un ensemble de poignée (60) comprenant une barre transversale (64), dans lequel le procédé comprend les étapes suivantes:
l'activation du moteur électrique de la tondeuse à gazon (10) en appuyant sur un bouton d'activation (82);
le déplacement de la butée d'anse (72) d'une position verrouillée à une position déverrouillée, et une fois que la butée d'anse (72) est dans sa position déverrouillée, l'anse de l'opérateur (70) peut être tirée dans une direction vers la barre transversale (64) de l'ensemble de poignée (62), permettant ainsi de fournir de l'énergie aux roues et/ou aux lames de coupe de la tondeuse à gazon (10), ce qui déclenche le démarrage de la tondeuse à gazon (10).

6. Procédé selon la revendication 5, dans lequel l'activation de la tondeuse à gazon (10) est définie par l'activation d'un moyen de fourniture d'énergie (50) agencé dans la tondeuse à gazon (10).

7. Procédé selon l'une quelconque des revendications 5 à 6, dans lequel le démarrage de la tondeuse à gazon (10) est défini par le démarrage d'une rotation d'au moins une lame agencée dans la tondeuse à gazon (10).
